# FASCICULE DE BREVET EUROPEEN

(11) **EP 4 174 709 B1**
(45) Date de publication et mention de la délivrance du brevet: **17.12.2025**
(21) Numéro de dépôt: 22203298.9
(22) Date de dépôt: 24.10.2022
(51) Int. Cl.: G06F 21/79, G06F 8/654, G06F 12/06, G06F 12/14

(54) **PROCEDE DE VERROUILLAGE D'UNE ZONE DE MEMOIRE NON-VOLATILE REINSCRIPTIBLE ET DISPOSITIF ELECTRONIQUE METTANT EN OEUVRE LEDIT PROCEDE**
VERFAHREN ZUM VERRIEGELN EINE ZONE VON EINEM WIEDERBESCHREIBBAREN NICHTFLÜCHTIGEN SPEICHERS UND ELEKTRONISCHE VORRICHTUNG ZUR DURCHFÜHRUNG DES VERFAHRENS
METHOD FOR LOCKING A ZONE OF A REWRITABLE NON-VOLATILE MEMORY AND ELECTRONIC DEVICE IMPLEMENTING SAID METHOD

(30) Priorité: 26.10.2021 FR 2111368
(43) Date de publication de la demande: 03.05.2023
(73) Titulaire: Sagemcom Broadband SAS, 92270 Bois-Colombes (FR)
(72) Inventeur: DIONISI, Florent, 92500 RUEIL MALMAISON (FR); LE BIHAN, Eric, 92500 RUEIL MALMAISON (FR); PERRAY, Pascal, 92500 RUEIL MALMAISON (FR); SAGOT, Didier, 92500 RUEIL MALMAISON (FR)
(74) Mandataire: Cabinet Le Guen Maillet

(56) Documents cités:
- EP-A1- 3 511 826
- WO-A1-2017/188976

## Description

### DOMAINE TECHNIQUE

Au moins un mode de réalisation concerne un procédé de verrouillage d'une mémoire non-volatile réinscriptible d'un dispositif électronique. Au moins un autre mode de réalisation concerne un dispositif électronique mettant en œuvre ledit procédé.

### ETAT DE LA TECHNIQUE ANTERIEURE

Un grand nombre de dispositifs électroniques (e.g. téléphones intelligents (« smartphone » en anglais), ordinateurs, objets connectés, ...) inclut du logiciel. Le logiciel de ces dispositifs est souvent décomposé en deux parties : d'une part, le logiciel de démarrage, et d'autre part, le logiciel applicatif.

Dans les dispositifs électroniques récents, il est connu de stocker ces logiciels de démarrage et applicatifs dans une mémoire non-volatile réinscriptible externe (notée MNVR par la suite), comme par exemple une mémoire EEPROM (acronyme anglais de « Electronically Erasable Programmable ROM »). Une mémoire Flash NAND est un exemple particulier de mémoire EEPROM. Une telle mémoire ne requiert pas d'alimentation électrique pour conserver les données au contraire d'une mémoire volatile RAM (acronyme anglais de « Random Access Memory »), e.g. une mémoire DDR (acronyme anglais de « Double Data Rate »). Ainsi, les données ne s'effacent pas lorsque l'on cesse d'alimenter la mémoire avec du courant électrique.

Lors de la mise en route d'un dispositif électronique, le logiciel de démarrage présent sur la mémoire MNVR est chargé par un chargeur de démarrage ou d'amorçage (« bootloader » en anglais) dans une mémoire vive du dispositif électronique en vue de son exécution par un processeur dudit dispositif électronique. Un chargeur de démarrage ou d'amorçage est un logiciel spécialisé dont le rôle est de transférer dans la mémoire vive les données de démarrage du dispositif électronique qui sont par exemple stockées dans la MNVR. Dans la suite, pour simplifier la rédaction, nous utiliserons le terme anglais de « bootloader ».

Ainsi, le bootloader se lance généralement juste après une mise sous tension ou un redémarrage du dispositif électronique.

De tels dispositifs électroniques sont particulièrement sensibles aux attaques telles qu'un effacement ou une reprogrammation, notamment lorsque la mémoire MNVR est utilisée comme périphérique de démarrage. Afin de protéger les logiciels stockés dans la mémoire MNVR contre un effacement ou une reprogrammation, il est connu de protéger en écriture certaines zones mémoire à l'aide de mécanismes particuliers. Par exemple, une mémoire à programmation unique de type OTP (acronyme anglais de « One-Time Programmable ») est utilisée dans certaines zones mémoire. Une zone mémoire de type OTP ne pourra donc être programmée qu'une seule fois ce qui interdit toute modification du logiciel stocké dans cette zone. D'autres zones de la mémoire MNVR peuvent être protégées contre toutes modifications à l'aide de mots de passe. De telles protections permettent d'éviter une modification par un tiers non autorisé du logiciel stocké dans la mémoire MNVR.

Par ailleurs, il est également connu de sécuriser la phase de démarrage du dispositif électronique afin de détecter une éventuelle modification. Pour cela, il est connu d'utiliser un procédé de démarrage utilisant une chaîne de confiance (« trust chain » en anglais). Un tel procédé de démarrage fonctionne par étapes avec à chaque étape un mécanisme de vérification de signatures.

Toutefois, de telles protections (i.e. OTP, utilisation de mots de passe, etc.) entravent la mise à jour logicielle de la mémoire MNVR ainsi que sa maintenance matérielle. D'une part, le logiciel, notamment le logiciel applicatif, a besoin d'être mis à jour régulièrement. Il doit donc pouvoir être remplacé par de nouvelles versions. Un accès en modification à la mémoire MNVR est donc nécessaire pendant la phase de mise à jour. D'autre part, une maintenance matérielle de la mémoire MNVR est également nécessaire. Dans le cas particulier d'une mémoire Flash, cette maintenance utilise par exemple un système de gestion de fichiers UBI (acronyme anglais de « Unsorted Block Images »). Les mécanismes de maintenance associés assurent notamment la gestion des zones défectueuses et le nivellement de l'usure (« Wear Leveling » en anglais). Or pour effectuer cette maintenance, le système de gestion de fichiers utilisé a besoin de l'accès en écriture à la mémoire MNVR pendant les phases de maintenance, par exemple pour réallouer une zone mémoire défectueuse par réécriture dans une autre zone mémoire.

Le document WO 2017/188976 A1 décrit un procédé de désactivation du verrouillage d'écriture matériel d'une région dans une mémoire non volatile en réponse à une réinitialisation d'un dispositif électronique, et de verrouillage d'écriture matériel de la région lorsqu'il n'existe aucun code de mise à jour pour un portion de code d'amorçage.

Le document EP 3 511 826 A1 décrit une mémoire non volatile configurée avec un bloc comprenant une première et une deuxième partie, et un procédé de mise à jour de l'une sélectionnée de la première et de la deuxième partie avec les informations mises à jour.

Il est souhaitable de pallier les inconvénients susmentionnés de l'état de la technique.

Notamment, il est souhaitable de proposer un procédé qui protège la mémoire MNVR contre les attaques et notamment les tentatives de modification ou d'effacement du logiciel, notamment du logiciel applicatif, tout en facilitant sa mise à jour ainsi que, le cas échéant, sa maintenance matérielle.

### EXPOSE DE L'INVENTION

L'invention concerne un procédé de verrouillage d'une mémoire non-volatile réinscriptible d'un dispositif électronique. Le procédé comprend :
- effectuer une première étape d'initialisation du dispositif électronique ;
- sélectionner une zone mémoire de ladite mémoire non-volatile réinscriptible parmi un ensemble de N zones mémoire de ladite mémoire non-volatile réinscriptible, chacune desdites N zones mémoire comprenant un contenu, N étant un entier ≥ 2, la zone mémoire sélectionnée comprenant une version la plus récente dudit contenu et dans le cas où M zones mémoire comprennent ladite version la plus récente dudit contenu, M étant un entier appartenant à [2 ; N], alors sélectionner parmi lesdites M zones mémoire, la zone mémoire dont la précédente sélection est la plus ancienne ;
- verrouiller ladite zone mémoire sélectionnée par un verrouillage dit verrouillage volatile, ledit verrouillage n'étant désactivé que par un passage hors tension de la mémoire ; et
- effectuer une seconde étape d'initialisation du dispositif électronique en utilisant un contenu stocké dans ladite zone mémoire sélectionnée.

Grâce au verrouillage d'au moins une zone mémoire, le procédé protège la mémoire MNVR contre les attaques et notamment les tentatives de modification ou d'effacement du contenu tout en facilitant une éventuelle mise à jour dudit contenu grâce aux zones mémoire non verrouillées.

Dans un mode de réalisation particulier, le procédé comprend en outre une maintenance matérielle desdites N zones mémoire avant tout verrouillage de ladite zone mémoire sélectionnée.

Dans un mode de réalisation particulier, effectuer une première étape d'initialisation du dispositif électronique comprend :
- Authentifier, par un démarrage initial sécurisé, un premier logiciel de démarrage stocké dans une première zone mémoire de ladite mémoire non-volatile réinscriptible ;
- démarrer ledit premier logiciel de démarrage ;
- authentifier, par ledit premier logiciel de démarrage, un second logiciel de démarrage stocké dans une seconde zone mémoire de ladite mémoire non-volatile réinscriptible différente de ladite première zone ;
- démarrer ledit second logiciel de démarrage ; et
- authentifier, par ledit second logiciel de démarrage, pour chacune desdites N zones mémoire, le contenu stocké.

Dans un mode de réalisation particulier, verrouiller ladite zone mémoire sélectionnée par verrouillage volatile comprend en outre de verrouiller ladite seconde zone mémoire par verrouillage volatile.

Dans un mode de réalisation particulier, le procédé comprend en outre une maintenance matérielle de ladite seconde zone mémoire avant tout verrouillage volatile de ladite seconde zone mémoire.

Dans un mode de réalisation particulier, ladite mémoire non-volatile réinscriptible est une mémoire Flash NAND.

Dans un mode de réalisation particulier, ladite première zone mémoire est une mémoire à programmation unique.

Dans un mode de réalisation particulier, ledit contenu est un logiciel applicatif et la seconde étape d'initialisation du dispositif électronique comprend le démarrage dudit logiciel applicatif.

Dans un mode de réalisation particulier, le procédé comprend en outre après l'étape d'effectuer une seconde étape d'initialisation du dispositif électronique en utilisant le contenu stocké dans ladite zone mémoire sélectionnée :
- déterminer qu'une mise à jour est nécessaire ;
- sélectionner parmi l'ensemble de N zones mémoire au moins une zone mémoire non verrouillée ;
- charger une nouvelle version du contenu dans ladite au moins une zone mémoire non verrouillée sélectionnée ;
- redémarrer ledit dispositif électronique.

Un dispositif électronique comprenant une mémoire non-volatile réinscriptible et au moins un processeur est également décrit. Le dispositif électronique est configuré pour :
- effectuer une première étape d'initialisation du dispositif électronique ;
- sélectionner une zone mémoire de ladite mémoire non-volatile réinscriptible parmi un ensemble de N zones mémoire de ladite mémoire non-volatile réinscriptible, chacune desdites N zones mémoire comprenant un contenu, N étant un entier ≥ 2, la zone mémoire sélectionnée étant une zone mémoire comprenant une version la plus récente dudit contenu et dans le cas où M zones mémoire comprennent ladite version la plus récente dudit contenu, M étant un entier appartenant à [2 ; N], alors sélectionner parmi lesdites M zones mémoire, la zone mémoire dont la précédente sélection est la plus ancienne ;
- verrouiller ladite zone mémoire sélectionnée par un verrouillage, dit verrouillage volatile, ledit verrouillage n'étant désactivé que par un passage hors tension de la mémoire ; et
effectuer une seconde étape d'initialisation du dispositif électronique en utilisant un contenu stocké dans ladite zone mémoire sélectionnée.

Le dispositif électronique est notamment configuré pour mettre en œuvre le procédé selon l'un quelconque des modes de réalisation précédents.

Un produit programme d'ordinateur est décrit. Il comprend des instructions pour mettre en œuvre le procédé de verrouillage selon l'un quelconque des modes de réalisation précédents, lorsque ledit programme est exécuté par un processeur.

Un support de stockage est décrit. Il stocke un programme d'ordinateur comprenant des instructions pour mettre en œuvre le procédé de verrouillage selon l'un quelconque des modes de réalisation précédents, lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement une architecture matérielle d'un dispositif électronique selon un mode de réalisation particulier ;
[Fig. 2] illustre schématiquement, selon un mode de réalisation particulier, une architecture matérielle d'un composant du dispositif électronique, ledit composant étant relié à une mémoire non volatile réinscriptible ;[Fig. 3] illustre schématiquement différentes zones de la mémoire non volatile réinscriptible selon un mode particulier de réalisation ;
[Fig. 4] illustre un procédé de verrouillage d'une mémoire non-volatile réinscriptible d'un dispositif électronique selon un mode de réalisation particulier ;
[Fig. 5] illustre en détails une étape du procédé de verrouillage d'une mémoire non-volatile réinscriptible selon un mode de réalisation particulier ;
[Fig. 6] illustre un procédé de mise à jour du contenu stocké dans la mémoire non volatile réinscriptible selon un mode de réalisation particulier ;
[Fig. 7] est un diagramme de séquences illustrant les procédés de mise à jour du contenu et de verrouillage selon un premier mode de réalisation ; et,
[Fig. 8] est un diagramme de séquences illustrant les procédés de mise à jour du contenu et de verrouillage selon un second mode de réalisation.

### EXPOSE DETAILLE DE MODES DE REALISATION

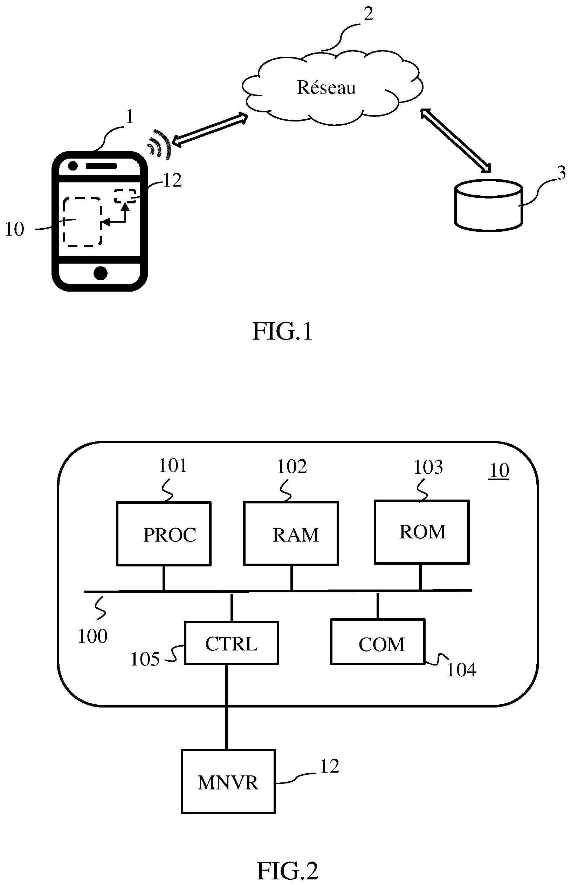

La Fig. 1 illustre schématiquement une architecture matérielle d'un dispositif électronique 1 connecté apte à mettre en œuvre l'invention comprenant un composant 10 de type système sur une puce SoC (acronyme anglais de « System On a Chip ») relié à une mémoire externe non volatile réinscriptible MNVR 12. Sur la Fig. 1, le dispositif électronique 1 est un téléphone mobile. Toutefois, le dispositif électronique peut être de tout autre nature (e.g. ordinateur, système embarqué, objet connecté, etc.). Le dispositif électronique 1 est connecté à un serveur 3 par l'intermédiaire d'un réseau 2. Le dispositif électronique 1 est par exemple un téléphone intelligent. Le réseau de communication 2 est par exemple un réseau 3G, 4G ou 5G, ou de type xDSL ou fibre optique.

La Fig.2 illustre schématiquement une architecture matérielle du composant 10 selon un mode de réalisation particulier. Le composant 10 est relié à la MNVR 12 comme par exemple une mémoire à base de technologie EEPROM (acronyme anglais de « Electronically Erasable Programmable ROM »). Dans un exemple particulier de réalisation, la mémoire MNVR 12 est une mémoire Flash NAND. Dans un autre exemple particulier de réalisation, la mémoire MNVR 12 est une mémoire de type eMMC (acronyme anglais de « embedded MultiMedia Card »), celle-ci pouvant correspondre à une mémoire Flash NAND couplée à un contrôleur mémoire. Dans le cas d'une mémoire MNVR 12 de type eMMC, des mécanismes de verrouillage volatile ou non permanent dédiés à l'eMMC peuvent être également utilisés pour certains modes de réalisation. Ces mécanismes sont par exemple basés sur une fonctionnalité connue sous la terminologie anglaise de « Replay Protected Memory Block ». Le composant 10 comprend alors, reliés par un bus de communication 100 : un processeur ou CPU (« Central Processing Unit » en anglais) 101 ; une mémoire vive RAM (« Random Access Memory » en anglais) 102, e.g. une mémoire DDR; une mémoire morte ROM (« Read Only Memory » en anglais) 103; au moins une interface de communication 104 permettant au dispositif électronique 1 de se connecter au réseau de communication 2 et de communiquer avec le serveur 3.

Le composant 10 comprend également des moyens de contrôle comme par exemple un contrôleur 105 configuré pour contrôler les échanges des données avec la MNVR 12. Le composant 10 peut comprendre d'autres moyens de contrôle non représentés sur la Fig.2, e.g. des moyens de contrôle de la RAM et/ou de la ROM.

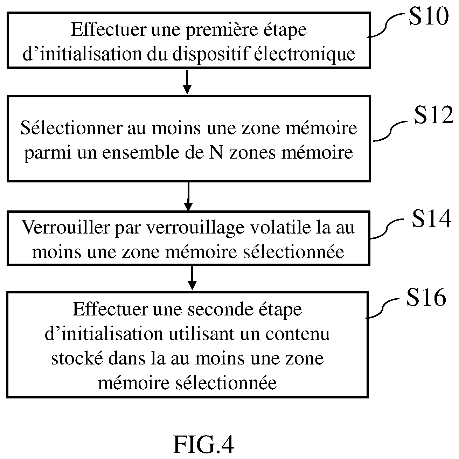

Le processeur 101 est capable d'exécuter des instructions chargées dans la RAM 102 à partir de la ROM 103, de la mémoire MNVR 12, ou d'un réseau de communication. Notamment, lorsque le dispositif électronique 1 est mis sous tension, le processeur 101 est capable de lire depuis la RAM 102 des instructions de démarrage et de les exécuter. Ces instructions de démarrage stockées dans la mémoire MNVR 12 sont chargées dans la RAM 102 par le bootloader. Ces instructions forment un programme d'ordinateur causant la mise en œuvre, par le processeur 101, de tout ou partie des procédés décrits en relation avec les Figs. 4 à 6.

En général, le dispositif électronique 1 comprend de la circuiterie électronique configurée pour mettre en œuvre les procédés décrits en relation avec les Figs. 4 à 6.

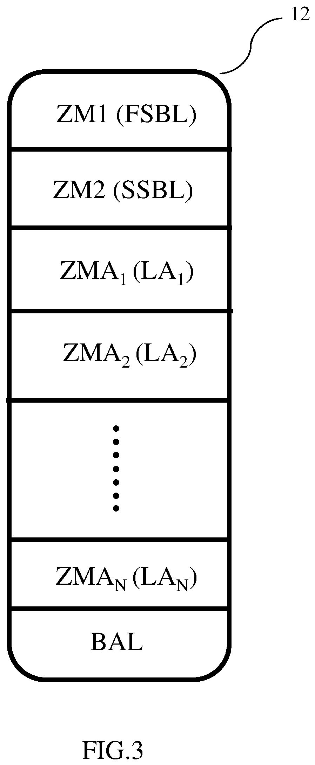

La Fig. 3 illustre schématiquement différentes zones de la mémoire MNVR 12 selon un mode particulier de réalisation. Cette mémoire stocke un logiciel de démarrage ainsi qu'au moins un contenu, e.g. un logiciel applicatif. En vue de mettre en œuvre un démarrage utilisant une chaîne de confiance, la mémoire MNVR 12 comprend une première zone mémoire ZM1 dans laquelle est stocké un premier module logiciel de démarrage FSBL (acronyme anglais de « First Stage BootLoader ») qui démarre suite au démarrage du dispositif électronique 1. Généralement, le FSBL est très petit en taille et réalise des initialisations minimales de la partie matérielle, e.g. une initialisation des contrôleurs des mémoires. Classiquement, il ne comprend pas de système d'exploitation (« Operating System » en anglais). Cette zone mémoire ZM1 est avantageusement une zone mémoire à programmation unique de type OTP. La mémoire MNVR 12 comprend une seconde zone mémoire ZM2 dans laquelle est stocké un second module logiciel de démarrage SSBL (acronyme anglais de « Secondary Stage BootLoader »). Ce second module logiciel permet de terminer d'initialiser le dispositif électronique 1 et gère tout ou partie de la mise à jour du contenu tel que le logiciel applicatif. Généralement, le second module logiciel SSBL comprend un système d'exploitation léger afin d'offrir des fonctionnalités plus importantes que le FSBL tout en restant compact en termes de taille. La mémoire MNVR 12 comprend ensuite une pluralité de N zones mémoire ZMA1 à ZMAN chacune comprenant un contenu LA1 à LAN tel qu'un logiciel applicatif (« applicative firmware » en anglais) , N étant un entier supérieur ou égal à 2. Dans un mode de réalisation particulier, LA1 à LAN sont des versions identiques ou différentes d'un même contenu, e.g. d'un même logiciel applicatif. Par exemple, LA1 à LAk peuvent être une version « m » du contenu et LAk+1 à LAN peuvent être une version plus récente, e.g. une version « m+1 » du même contenu, où k est un entier appartenant à [1 ; N-1] et « m » est un identifiant de version, e.g. « m » est un entier positif défini de sorte que plus « m » est grand plus la version du contenu est récente. Dans un mode de réalisation, le contenu est un logiciel applicatif qui est basé sur un système d'exploitation Linux (e.g. Kernel, RootFS). Dans d'autres modes de réalisation, le contenu comprend un ou des modules du logiciel applicatif. En effet, il peut s'agir de mettre à jour seulement une partie du logiciel applicatif via la réception d'un nouveau module, il peut s'agir également d'un module associé à un nouveau composant ajouté au dispositif (par exemple une mémoire de masse comme un disque dur). Dans une variante, le contenu est un logiciel bas niveau tel qu'un « firmware » ou une partie de « firmware », par exemple le pilote d'un ensemble de composants (« chipset » en anglais) Wi-Fi. Dans une autre variante, le contenu est un logiciel de maintenance pour une mise à jour de certains paramètres du dispositif électronique ne pouvant pas être modifiés par le logiciel applicatif. Optionnellement, la mémoire MNVR 12 peut comprendre d'autres zones de mémoire comme par exemple une zone mémoire BAL stockant des données devant être échangées entre le contenu stocké dans les zones mémoire ZMA1 à ZMAN et le SSBL.

Afin de détecter une éventuelle modification par un tiers non autorisé de la mémoire MNVR 12, un démarrage utilisant une chaîne de confiance est mis en œuvre. A cet effet, des sommes de contrôle sont utilisées pour une authentification des différents modules (FSBL, SSBL et LAi, i∈[1 : N]). Dans un exemple de réalisation, le FSBL est authentifié par un démarrage (« boot » en anglais) initial sécurisé du composant 10. Dans le cas où l'authentification réussit, le FSBL démarre. Ensuite, le FSBL authentifie le SSBL. Dans le cas où l'authentification réussit, le SSBL démarre. Il va à son tour authentifier le contenu stocké dans chaque zone mémoire ZMA1 à ZMAN.

La Fig. 4 illustre un procédé de verrouillage d'une mémoire non-volatile réinscriptible 12 d'un dispositif électronique 1selon un mode de réalisation particulier. Le procédé est décrit pour N=2. Toutefois, le même procédé peut s'appliquer à N>2. Le procédé de la Fig.4 est décrit dans le cas particulier où les zones mémoires ZMAi, i∈[1 : N] contiennent du logiciel applicatif. Toutefois, le procédé peut être généralisé et s'appliquer à d'autres types de contenus, e.g. notamment à d'autres types de logiciels internes (« firmware » en anglais). Le dispositif électronique 1 démarre suite par exemple à sa mise sous tension ou bien redémarre, e.g. suite à une mise à jour logicielle. Lors d'une étape S10, le processeur 101 effectue une première étape d'initialisation du dispositif électronique 1. Cette étape comprend généralement, le lancement d'un logiciel de démarrage. Dans un mode particulier de réalisation, le logiciel de démarrage met en œuvre une chaîne de confiance.

Lors de l'étape S12, le processeur 101 sélectionne au moins une zone mémoire parmi les zones mémoire contenant le logiciel applicatif, i.e. parmi ZMA1 et ZMA2, pour être protégée par verrouillage volatile. Dans un mode de réalisation, la version du logiciel applicatif stocké dans ZMA1 est comparée à la version du logiciel applicatif stocké dans ZMA2. La zone mémoire contenant le logiciel applicatif dont la version est la plus récente est sélectionnée. Dans le cas où les deux zones mémoire contiennent des versions identiques, la zone mémoire dont la précédente sélection est la plus ancienne est sélectionnée. Plus généralement, dans le cas de M zones mémoire comprenant la version la plus récente du logiciel applicatif, M étant un entier appartenant à [2 ; N], la zone mémoire dont la précédente sélection, e.g. suite à un démarrage ou redémarrage du dispositif électronique, est la plus ancienne parmi les sélections desdites M zones mémoire est à nouveau sélectionnée. Ainsi, si ZMA1 et ZMA2 contiennent toutes les deux une version m du logiciel applicatif, alors la zone mémoire ZMA2 est sélectionnée dans le cas où la zone ZMA1 a été sélectionnée la fois précédente et inversement. Selon un mode ne faisant pas partie de l'invention, non représentée sur la Fig.4, la même zone mémoire est toujours sélectionnée, e.g. ZMA1. Dans ce cas, il peut être nécessaire de recopier le contenu de la zone mémoire ZMA2 dans la zone mémoire ZMA1 avant son verrouillage volatile afin que la version la plus récente du logiciel applicatif puisse démarrer. Optionnellement, des paramètres sont également mis à jour dans la zone mémoire BAL. Par exemple, un identifiant, e.g. une adresse, de la zone mémoire sélectionnée. De manière générale dans le cas de N zones mémoire, au moins une zone mémoire est sélectionnée à l'étape S12 pour être protégée contre toutes modifications par verrouillage volatile.

Le procédé de la Fig.4 peut être généralisé et s'appliquer à d'autres type de contenu. Dans ce cas, lors de l'étape S12, le processeur 101 sélectionne au moins une zone mémoire parmi les zones mémoire ZMAi pour être protégée par verrouillage volatile. Dans un mode de réalisation, les versions du contenu stockées dans les zones mémoire ZMAi sont comparées entre elles. La zone mémoire contenant le contenu dont la version est la plus récente est sélectionnée. Dans le cas où plusieurs zones mémoire contiennent des versions identiques, la zone mémoire dont la précédente sélection est la plus ancienne est sélectionnée.

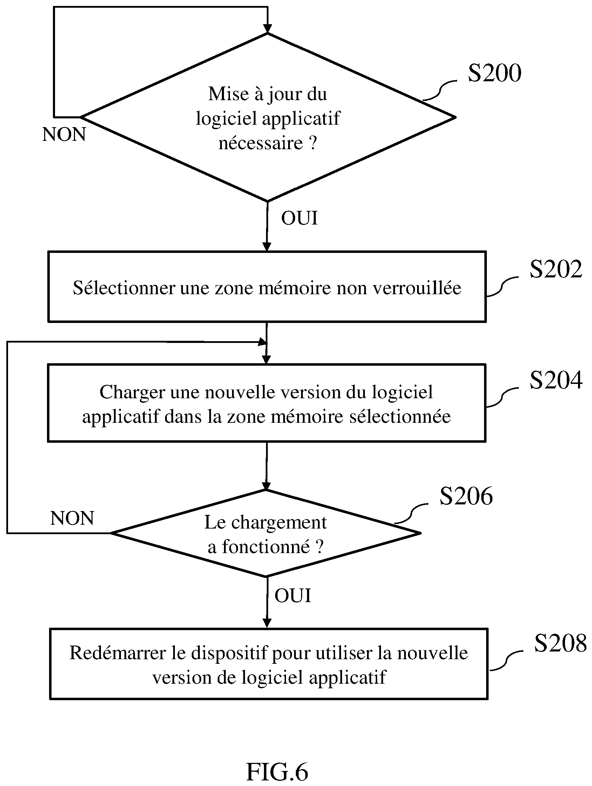

Lors d'une étape S14, la zone mémoire sélectionnée, dite zone mémoire active, est protégée contre toute modification par un verrouillage volatile. A cet effet, le processeur 101 envoie des commandes via des moyens de communication internes à la mémoire MNVR 12 qui les exécute pour verrouiller la zone mémoire sélectionnée. Les commandes envoyées dépendent du fabriquant de la MNVR 12. Un tel verrouillage volatile ne peut être désactivé que par un passage hors tension de ladite zone mémoire. Dans une variante de réalisation, la zone mémoire ZM2 (SSBL) et la zone mémoire sélectionnée sont protégées par verrouillage volatile contre toutes modifications. L'autre zone mémoire qui n'a pas été sélectionnée, dite zone mémoire inactive, n'est quant à elle pas protégée, i.e. est non verrouillée. Dès lors, cette zone mémoire est utilisée pour une mise à jour du logiciel applicatif, plus généralement du contenu, comme illustré par la Fig. 6.

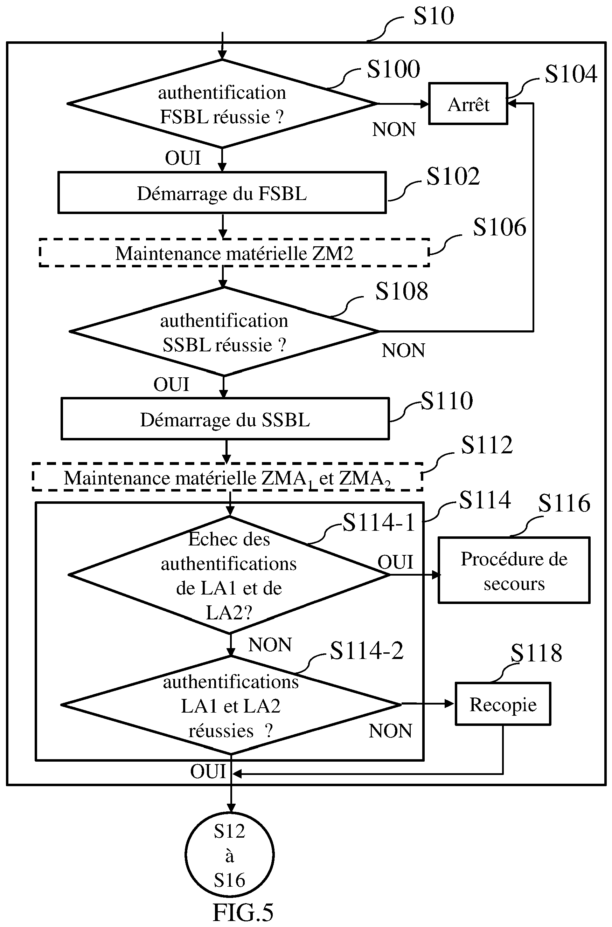

Lors d'une étape S16, le processeur 101 effectue une seconde étape d'initialisation du dispositif électronique en utilisant le contenu stocké dans la zone mémoire sélectionnée. Par exemple, il démarre le logiciel applicatif stocké dans la zone mémoire sélectionnée, i.e. la zone mémoire active. Dans un autre mode de réalisation, lorsque le contenu comprend un logiciel de maintenance, le processeur 101 utilise ce contenu et démarre le logiciel de maintenance afin par exemple de mettre à jour ou modifier certains paramètres du dispositif électronique qui ne sont pas accessibles par le logiciel applicatif. Dans un autre exemple, le contenu correspond à un module logiciel et le processeur 101 utilise ce module logiciel pour terminer son initialisation. Dans un autre exemple, plusieurs zones mémoires sont sélectionnées, chacune comprenant un module logiciel différent à utiliser dans le processus d'initialisation du dispositif électronique. La Fig. 5 illustre en détails l'étape S10 du procédé de verrouillage selon un mode de réalisation particulier.

Lors d'une étape S100, le FSBL est authentifié par un logiciel de démarrage initial sécurisé du composant 10. Plus précisément, une vérification d'intégrité des données présentes dans la zone mémoire ZM1 est effectuée. Cette vérification peut être réalisée par différents moyens, comme un calcul d'une somme de contrôle (e.g. en utilisant des fonctions de hachage de type SHA256) sur les données écrites dans la zone mémoire ZM1, i.e. sur le FSBL. Cette somme de contrôle est ensuite comparée à une somme de contrôle de référence stockée par exemple dans un entête du FSBL. Cette somme de contrôle de référence est généralement chiffrée et son déchiffrage est effectué en utilisant une clé publique fournie par le logiciel de démarrage initial sécurisé. Dans le cas où l'authentification réussit, le FSBL démarre lors d'une étape S102. Sinon, le dispositif électronique 1 s'arrête lors d'une étape S104.

Lors d'une étape optionnelle S106, une maintenance matérielle de la zone mémoire ZM2 dans laquelle est stocké le SSBL est effectuée avant authentification du SSBL, par exemple en utilisant un système de gestion de fichiers UBI. La maintenance matérielle comprend par exemple une détection d'erreur(s) et le cas échéant une correction des erreurs détectées en utilisant notamment des codes correcteurs d'erreur. Toutefois, si une telle correction par codes correcteurs d'erreur n'est plus possible, e.g. parce que le nombre d'erreurs est trop important, alors une recopie du contenu de la zone mémoire défectueuse par réécriture dans une autre zone mémoire peut être effectuée avant de perdre la totalité du contenu de la zone mémoire défectueuse.

Lors d'une étape S108, le SSBL est authentifié par le FSBL. Plus précisément, une vérification d'intégrité des données présentes dans la zone mémoire ZM2 est effectuée. Cette vérification peut être réalisée par différents moyens, comme un calcul d'une somme de contrôle (e.g. en utilisant des fonctions de hachage de type SHA256) sur les données écrites dans la zone mémoire ZM2, i.e. sur le SSBL. Cette somme de contrôle est ensuite comparée à une somme de contrôle de référence stockée par exemple dans le SSBL dans un entête du SSBL. Cette somme de contrôle de référence est généralement chiffrée et son déchiffrage est effectué en utilisant une clé publique fournie par le FSBL. En cas d'égalité, le SSBL est authentifié. Dans le cas où l'authentification réussit, le SSBL démarre lors d'une étape S110. Sinon, le dispositif électronique 1 s'arrête lors de l'étape S104.

Lors d'une étape optionnelle S112, une maintenance matérielle des zones mémoire ZMA1 et ZMA2 dans lesquelles est stocké par exemple du logiciel applicatif est effectuée avant authentification, par exemple en utilisant le système de gestion de fichiers UBI. Les mêmes mécanismes (détection d'erreur(s), correction d'erreur, recopie, etc) que ceux mis en œuvre à l'étape S106 peuvent être mis en œuvre à l'étape S112.

Lors d'une étape S114, le contenu stocké dans ZMA1 et ZMA2 est authentifié par le SSBL. Plus précisément, une vérification d'intégrité des données présentes dans les zones mémoire ZMA1 et ZMA2 est effectuée. Cette vérification peut être réalisée par différents moyens, comme un calcul d'une somme de contrôle (e.g. en utilisant des fonctions de hachage de type SHA256) sur les données écrites dans chacune des zones mémoire ZMA1 et ZMA2. La somme de contrôle calculée sur les données écrites dans ZMA1 est ensuite comparée à une première somme de contrôle de référence stockée dans un entête de LA1 et la somme de contrôle calculée sur les données écrites dans ZMA2 est ensuite comparée à une seconde somme de contrôle de référence stockée dans un entête de LA2. Ces première et seconde sommes de contrôle de référence sont généralement chiffrées et leur déchiffrage est effectué en utilisant des clés publiques fournies par le SSBL.

Dans le cas où ni ZMA1 ni ZMA2 ne contient du contenu authentifié par le SSBL (cas S114-1), une procédure de secours est mise en œuvre lors d'une étape S116. Par exemple, un contenu basique tel qu'un logiciel applicatif simplifié stocké dans une troisième zone mémoire ZMA3 protégée de manière permanente, e.g. par OTP, peut être utilisé par la procédure de secours. Dans le cas où les deux zones mémoire ZMA1 et ZMA2 contiennent du contenuLA1 (LA2 respectivement) qui a été authentifié par le SSBL (cas S114-2), le procédé continue à l'étape S12. Dans le cas où une seulement des deux zones mémoire ZMA1 ou ZMA2 contient du contenu qui a été authentifié par le SSBL (cas S114-2), le contenu qui a été authentifié par le SSBL est recopié lors d'une étape S118 dans la zone mémoire dans laquelle est stocké le contenu non authentifié. Par exemple, si le contenuLA1 stocké dans ZMA1 est authentifié par le SSBL alors que celui LA2 stocké dans ZMA2 ne l'est pas, le contenu de la zone mémoire ZMA1 est recopié dans ZMA2 et inversement dans le cas où le contenu LA1 stocké dans ZMA1 n'est pas authentifié par le SSBL alors que celui LA2 stocké dans ZMA2 l'est. Une fois la recopie effectuée le procédé continue à l'étape S12.

La Fig. 6 illustre un procédé de mise à jour du contenu, e.g. logiciel applicatif, stocké dans les zones ZMAi de la mémoire MNVR 12 selon un mode de réalisation particulier. Le procédé de la Fig. 6 est décrit pour du logiciel applicatif mais peut s'appliquer à d'autres types de contenu nécessitant une mise à jour, notamment à d'autres types de logiciel (« firmware » en anglais). Ce procédé s'effectue généralement en tâche de fond alors que le logiciel applicatif est en train de tourner.

Dans le cas où une mise à jour est nécessaire (étape S200), au moins une zone mémoire inactive, i.e. non verrouillée, est sélectionnée par le processeur 101 lors d'une étape S202. Dans le cas où N=2, la zone mémoire qui n'a pas été sélectionnée à l'étape S12 est la zone mémoire inactive sélectionnée à l'étape S202. Dans le cas d'une pluralité de zones mémoire inactives, au moins une zone mémoire inactive, i.e. non verrouillée, est sélectionnée. Dans une variante, toutes les zones inactives sont sélectionnées. Le processeur 101 peut être informé par un serveur qu'une nouvelle version du logiciel applicatif est disponible. Dans une variante de réalisation, le processeur 101 peut interroger régulièrement le serveur pour savoir si une nouvelle version est disponible. Dans les deux cas, le processeur 101 récupère cette nouvelle version auprès du serveur.

Dans une étape S204, le processeur 101 charge la nouvelle version du logiciel applicatif dans la ou les zone(s) mémoire inactive(s) sélectionnée(s) à l'étape S202 et donc qui ne sont pas protégées par verrouillage volatile. Ce nouveau logiciel applicatif est chargé par le processeur 101 par exemple depuis la RAM 102 via des moyens de communication internes ou bien directement, i.e. sans passer par la RAM.

Dans une étape S206, le processeur 101 effectue un contrôle pour vérifier que le chargement de la nouvelle version du logiciel applicatif dans la ou les zone(s) mémoire inactive(s) sélectionnée(s) a fonctionné. Plus précisément, une vérification d'intégrité des données présentes dans la zone mémoire inactive sélectionnée est effectuée. Cette vérification peut être réalisée par différents moyens, comme un calcul d'une somme de contrôle sur les données écrites dans la zone mémoire inactive. Cette somme de contrôle est ensuite comparée à une somme de contrôle de référence calculée sur les données qui correspondent au nouveau logiciel applicatif tel qu'obtenu par le processeur 101. En variante, la vérification est obtenue par une relecture complète et une comparaison des données brutes présentes dans la zone mémoire inactive sélectionnée, avec les données stockées localement dans la RAM 102 et qui correspondent au nouveau logiciel applicatif tel qu'obtenu par le processeur 101. Dans le cas où le chargement de la nouvelle version n'a pas fonctionné correctement, le procédé reprend à l'étape S204. Dans le cas où le chargement de la nouvelle version a fonctionné, le procédé continue à l'étape S208. A l'étape S208, le procédé de mise à jour prend fin par exemple par un redémarrage du dispositif électronique 1 pour utiliser la nouvelle version du logiciel applicatif.

Dans une variante de réalisation non représentée sur la Fig. 6, le processeur 101 détecte sur un réseau la disponibilité d'une nouvelle version d'un contenu, e.g. le logiciel applicatif, stocké sur un serveur et en informe le second module logiciel SSBL. Alternativement, le processeur est informé par le serveur de la disponibilité d'une nouvelle version d'un contenu et en informe le second module logiciel SSBL. A cet effet, la zone mémoire BAL est avantageusement utilisée pour informer le SSBL de la disponibilité d'une nouvelle version d'un contenu. L'adresse du serveur auprès duquel récupérer ladite nouvelle version peut notamment être indiqué dans la BAL. Le SSBL est adapté pour, lors d'un redémarrage, récupérer l'adresse du serveur dans la BAL, se connecter audit serveur, recevoir cette nouvelle version du contenu et considérer cette nouvelle version afin de compléter le processus redémarrage.

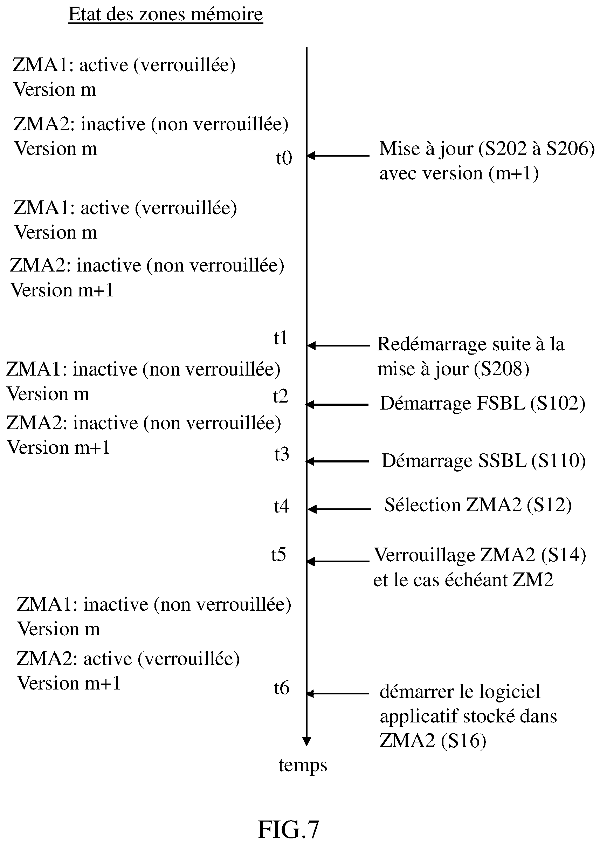

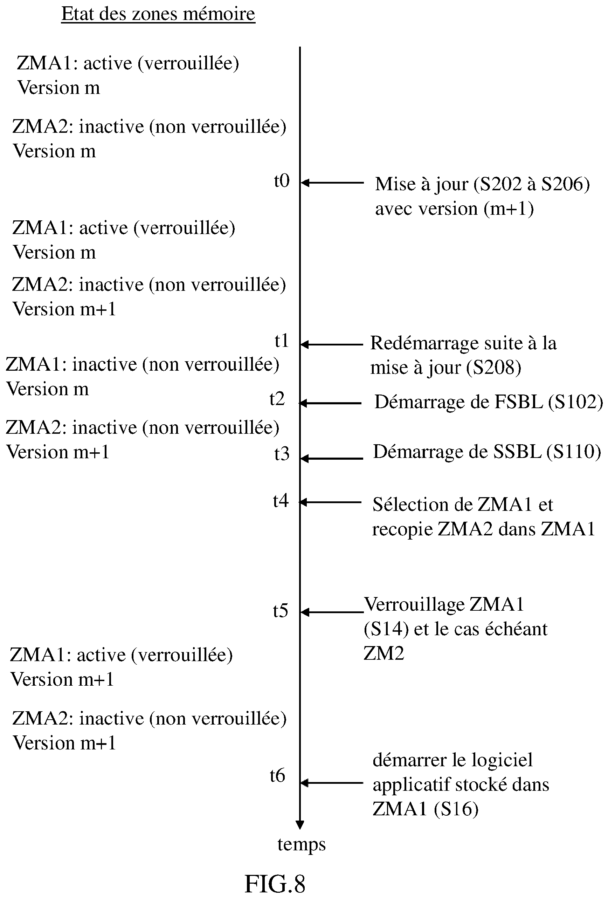

Le comportement du dispositif électronique 1, et plus particulièrement de la mémoire MNVR 12, lors d'une phase de mise à jour va maintenant être décrit. En référence aux diagrammes de séquences des Figs 7 et 8, la description porte sur un scénario où initialement la zone mémoire ZMA1 est active et donc protégée contre toutes modifications par verrouillage volatile alors que la zone ZMA2 est inactive et donc non protégée contre toutes modifications. Sur les Figs 7 et 8, ZMA1 et ZMA2 comprennent initialement la même version m du contenu en l'occurrence du logiciel applicatif. Toutefois, ZMA2 pourrait comprendre une version plus ancienne, e.g. une version (m-1). Dans l'exemple de la Fig. 7, les deux zones mémoire peuvent être protégées alternativement par verrouillage volatile alors que dans la Fig. 8 seule la zone mémoire ZMA1 peut être protégée par verrouillage volatile.

En référence à la Fig. 7, à un instant t0, une mise à jour est effectuée, e.g. parce qu'une version (m+1) du logiciel applicatif est disponible. Suite à cette mise à jour et donc au chargement à l'étape S204 de la nouvelle version (m+1) du logiciel applicatif dans la zone mémoire inactive, i.e. ZMA2, la zone mémoire ZMA2 qui est toujours non verrouillée comprend la nouvelle version m+1 du logiciel. La zone mémoire ZMA1 n'a, quant à elle, pas été modifiée par le procédé de mise à jour.

A un instant t1, un redémarrage S10 du dispositif électronique 1 est effectué suite à la mise à jour. Le redémarrage a notamment pour effet d'enlever le verrouillage volatile de la zone mémoire ZMA1 et le cas échéant de ZM2. Le redémarrage comprend la mise en œuvre du procédé de verrouillage décrit en référence à la Fig. 5. En supposant que tout se déroule correctement, i.e. notamment que les logiciels stockés dans les différentes zones mémoire de MNVR 12 sont authentifiés, le FSBL démarre à un temps t2, puis le SSBL démarre à un temps t3.

Les zones mémoire ZMA1 et ZMA2 sont analysées. La zone mémoire ZMA2 qui comprend une version plus récente du logiciel applicatif est sélectionnée S12 à un temps t4 et devient la nouvelle zone mémoire active. ZMA2 et le cas échéant ZM2 sont alors protégées S14 par verrouillage volatile à un instant t5. La nouvelle version de logiciel applicatif stocké dans ZMA2 démarre S16 à un instant t6.

Lors d'une prochaine mise à jour, la nouvelle version du logiciel applicatif sera chargée dans la zone mémoire non verrouillée à savoir ZMA1. Ainsi, les zones mémoire ZMA1 et ZMA2 sont protégées alternativement par verrouillage volatile. Cette alternance est intéressante dans la mesure où elle permet une usure plus homogène des zones mémoire.

En cas d'attaque par un tiers malveillant, la zone mémoire qui contient le logiciel applicatif ne peut pas être modifiée/effacée. Par ailleurs, une zone mémoire non verrouillée est toujours disponible pour une mise à jour d'une nouvelle version de logiciel. Cette zone mémoire peut être modifiée, effacée par un tiers malveillant. Dans ce cas, elle ne sera, par la suite, pas authentifiée lors de l'étape S 114 et le logiciel éventuellement inséré ne démarrera pas.

En référence à la Fig. 8, à un instant t0, une mise à jour est effectuée, e.g. parce qu'une version (m+1) du logiciel applicatif est disponible. Suite à cette mise à jour et donc au chargement à l'étape S204 de la nouvelle version (m+1) du logiciel applicatif dans la zone mémoire inactive, i.e. ZMA2, la zone mémoire ZMA2 qui est toujours non verrouillée comprend la nouvelle version m+1 du logiciel. La zone mémoire ZMA1 n'a, quant à elle, pas été modifiée par le procédé de mise à jour.

A un instant t1, un redémarrage S10 du dispositif électronique 1 est effectué suite à la mise à jour. Le redémarrage a notamment pour effet d'enlever le verrouillage volatile de la zone mémoire ZMA1 et le cas échéant de ZM2. Le redémarrage comprend la mise en œuvre du procédé de verrouillage décrit en référence à la Fig. 5. En supposant que tout se déroule correctement, i.e. notamment que les logiciels stockés dans les différentes zones mémoire de MNVR 12 sont authentifiés, le FSBL démarre à un temps t2, puis le SSBL démarre à un temps t3.

Seule la zone mémoire ZMA1 pouvant être protégée par verrouillage volatile, la zone mémoire ZMA1 est nécessairement sélectionnée S12 et le logiciel applicatif mis à jour dans ZMA2 est recopié à un instant t4 dans ZMA1 préalablement à son verrouillage.

ZMA1 et le cas échéant ZM2 sont alors protégées S14 par verrouillage volatile à un instant t5. La nouvelle version de logiciel applicatif stocké dans ZMA1 démarre S16 à un instant t6.

## Revendications

1. Un procédé de verrouillage d'une mémoire non-volatile réinscriptible (12) d'un dispositif électronique, ledit procédé comprenant :
- effectuer (S10) une première étape d'initialisation du dispositif électronique ; :
- sélectionner (S12) une zone mémoire de ladite mémoire non-volatile réinscriptible parmi un ensemble de N zones mémoire de ladite mémoire non-volatile réinscriptible, chacune desdites N zones mémoire comprenant un contenu, N étant un entier ≥ 2, la zone mémoire sélectionnée comprenant une version la plus récente dudit contenu ; le procédé étant **caractérisé en ce qu'**il comporte, dans le cas où M zones mémoire comprennent ladite version la plus récente dudit contenu, M étant un entier appartenant à [2 ; N], alors sélectionner parmi lesdites M zones mémoire, la zone mémoire dont la précédente sélection est la plus ancienne ;
- verrouiller (S14) ladite zone mémoire sélectionnée par un verrouillage dit verrouillage volatile, ledit verrouillage n'étant désactivé que par un passage hors tension de la mémoire ; et
- effectuer une seconde étape d'initialisation du dispositif électronique en utilisant (S16) un contenu stocké dans ladite zone mémoire sélectionnée.

2. Le procédé selon la revendication 1, comprenant en outre une maintenance matérielle desdites N zones mémoire avant tout verrouillage de ladite zone mémoire sélectionnée, la maintenance matérielle comprenant une détection d'erreur et, le cas échéant, une correction des erreurs détectées.

3. Le procédé selon l'une des revendications 1 et 2, dans lequel effectuer (S10) une première étape d'initialisation du dispositif électronique comprend :
- Authentifier, par un démarrage initial sécurisé, un premier logiciel de démarrage stocké dans une première zone mémoire (ZM1) de ladite mémoire non-volatile réinscriptible, ladite première zone mémoire (ZM1) étant différente des N zones mémoire de ladite mémoire non-volatile réinscriptible ;
- démarrer ledit premier logiciel de démarrage ;
- authentifier, par ledit premier logiciel de démarrage, un second logiciel de démarrage stocké dans une seconde zone mémoire (ZM2) de ladite mémoire non-volatile réinscriptible différente de ladite première zone (ZM1), ladite seconde zone mémoire (ZM1) étant différente des N zones mémoire de ladite mémoire non-volatile réinscriptible ;
- démarrer ledit second logiciel de démarrage ; et
- authentifier, par ledit second logiciel de démarrage, pour chacune desdites N zones mémoire, le contenu stocké dans chacune desdites N zones mémoire.

4. Le procédé selon la revendication 3, dans lequel verrouiller (S14) ladite zone mémoire sélectionnée par verrouillage volatile comprend en outre de verrouiller (S14) ladite seconde zone mémoire (ZM2) par verrouillage volatile.

5. Le procédé selon la revendication 4, comprenant en outre une maintenance matérielle de ladite seconde zone mémoire (ZM2) avant tout verrouillage volatile de ladite seconde zone mémoire (ZM2), la maintenance matérielle comprenant une détection d'erreur et le cas échéant, une correction des erreurs détectées.

6. Le procédé selon l'une des revendications 1 à 5, dans lequel ladite mémoire non-volatile réinscriptible est une mémoire Flash NAND et/ou une mémoire eMMC.

7. Le procédé selon l'une des revendications 3 à 6, dans lequel ladite première zone mémoire (ZM1) est une mémoire à programmation unique.

8. Le procédé selon l'une des revendications précédentes, dans lequel ledit contenu est un logiciel applicatif et la seconde étape d'initialisation du dispositif électronique comprend le démarrage dudit logiciel applicatif.

9. Le procédé selon l'une des revendications 1 à 8, comprenant en outre après l'étape d'effectuer (S10) une seconde étape d'initialisation du dispositif électronique en utilisant (S16) le contenu stocké dans ladite zone mémoire sélectionnée:
- déterminer qu'une mise à jour est nécessaire ;
- sélectionner parmi l'ensemble de N zones mémoire au moins une zone mémoire non verrouillée ;
- charger une nouvelle version du contenu dans ladite au moins une zone mémoire non verrouillée sélectionnée ;
- redémarrer ledit dispositif électronique.

10. Un dispositif électronique comprenant une mémoire non-volatile réinscriptible (12) et au moins un processeur configuré pour :
- effectuer (S10) une première étape d'initialisation du dispositif électronique ; :
- sélectionner (S12) une zone mémoire de ladite mémoire non-volatile réinscriptible parmi un ensemble de N zones mémoire de ladite mémoire non-volatile réinscriptible, chacune desdites N zones mémoire comprenant un contenu, N étant un entier ≥ 2, la zone mémoire sélectionnée étant une zone mémoire comprenant une version la plus récente dudit contenu ; ledit dispositif étant **caractérisé en ce que** le processeur est en outre configuré pour, dans le cas où M zones mémoire comprennent ladite version la plus récente dudit contenu, M étant un entier appartenant à [2 ; N], alors sélectionner parmi lesdites M zones mémoire, la zone mémoire dont la précédente sélection est la plus ancienne ;
- verrouiller (S14) ladite zone mémoire sélectionnée par un verrouillage, dit verrouillage volatile, ledit verrouillage n'étant désactivé que par un passage hors tension de la mémoire ; et
- effectuer (S10) une seconde étape d'initialisation du dispositif électronique en utilisant (S16) un contenu stocké dans ladite zone mémoire sélectionnée.

11. Le dispositif électronique selon la revendication 10, **caractérisé en ce qu'**il est configuré pour mettre en œuvre le procédé selon l'une des revendications 1 à 9.

12. Un produit programme d'ordinateur **caractérisé en ce qu'**il comprend des instructions pour mettre en œuvre le procédé de verrouillage selon l'une quelconque des revendications 1 à 9, lorsque ledit programme est exécuté par un processeur.

13. Un support de stockage **caractérisé en ce qu'**il stocke un programme d'ordinateur comprenant des instructions pour mettre en œuvre le procédé de verrouillage selon l'une quelconque des revendications 1 à 9, lorsque ledit programme est exécuté par un processeur.

## Patentansprüche

1. Verfahren zum Sperren eines wiederbeschreibbaren nichtflüchtigen Speichers (12) einer elektronischen Vorrichtung, wobei das Verfahren umfasst:
- Durchführen (S10) eines ersten Initialisierungsschritts der elektronischen Vorrichtung;
- Auswählen (S12) eines Speicherbereichs des wiederbeschreibbaren nichtflüchtigen Speichers aus einer Menge von N Speicherbereichen des wiederbeschreibbaren nichtflüchtigen Speichers, wobei jeder der N Speicherbereiche einen Inhalt umfasst, wobei N eine ganze Zahl ≥ 2 ist und der ausgewählte Speicherbereich eine aktuellste Version des Inhalts umfasst; wobei das Verfahren **dadurch gekennzeichnet ist, dass** es in dem Fall, dass M Speicherbereiche die aktuellste Version des Inhalts umfassen, wobei M eine ganze Zahl im Bereich von [2; N] ist, das Auswählen desjenigen Speicherbereichs aus den M Speicherbereichen umfasst, dessen vorherige Auswahl die älteste ist;
- Sperren (S14) des ausgewählten Speicherbereichs durch eine als flüchtige Sperre bezeichnete Sperre, wobei die Sperre nur durch ein Ausschalten der Stromversorgung des Speichers deaktiviert wird; und
- Durchführen eines zweiten Initialisierungsschritts der elektronischen Vorrichtung unter Verwendung (S16) eines in dem ausgewählten Speicherbereich gespeicherten Inhalts.

2. Verfahren nach Anspruch 1, ferner umfassend eine Hardware-Wartung der N Speicherbereiche vor jeder Sperrung des ausgewählten Speicherbereichs, wobei die Hardware-Wartung eine Fehlererkennung und gegebenenfalls eine Korrektur der erkannten Fehler umfasst.

3. Verfahren nach einem der Ansprüche 1 und 2, wobei das Durchführen (S10) eines ersten Initialisierungsschritts der elektronischen Vorrichtung umfasst:
- Authentifizieren, durch einen sicheren initialen Start, einer ersten Startsoftware, die in einem ersten Speicherbereich (ZM1) des wiederbeschreibbaren nichtflüchtigen Speichers gespeichert ist, wobei sich der erste Speicherbereich (ZM1) von den N Speicherbereichen des wiederbeschreibbaren nichtflüchtigen Speichers unterscheidet;
- Starten der ersten Startsoftware;
- Authentifizieren, durch die erste Startsoftware, einer zweiten Startsoftware, die in einem zweiten Speicherbereich (ZM2) des wiederbeschreibbaren nichtflüchtigen Speichers gespeichert ist, der sich von dem ersten Speicherbereich (ZM1) unterscheidet, wobei sich der zweite Speicherbereich (ZM2) von den N Speicherbereichen des wiederbeschreibbaren nichtflüchtigen Speichers unterscheidet;
- Starten der zweiten Startsoftware; und
- Authentifizieren, durch die zweite Startsoftware, für jeden der N Speicherbereiche, des in jedem der N Speicherbereiche gespeicherten Inhalts.

4. Verfahren nach Anspruch 3, wobei das Sperren (S14) des ausgewählten Speicherbereichs durch eine flüchtige Sperre ferner das Sperren (S14) des zweiten Speicherbereichs (ZM2) durch eine flüchtige Sperre umfasst.

5. Verfahren nach Anspruch 4, ferner umfassend eine Hardware-Wartung des zweiten Speicherbereichs (ZM2) vor jeder flüchtigen Sperrung des zweiten Speicherbereichs (ZM2), wobei die Hardware-Wartung eine Fehlererkennung und gegebenenfalls eine Korrektur der erkannten Fehler umfasst.

6. Verfahren nach einem der Ansprüche 1 bis 5, wobei der wiederbeschreibbare nichtflüchtige Speicher ein NAND-Flash-Speicher und/oder ein eMMC-Speicher ist.

7. Verfahren nach einem der Ansprüche 3 bis 6, wobei der erste Speicherbereich (ZM1) ein einmal programmierbarer Speicher ist.

8. Verfahren nach einem der vorhergehenden Ansprüche, wobei der Inhalt eine Anwendungssoftware ist und der zweite Initialisierungsschritt der elektronischen Vorrichtung das Starten der Anwendungssoftware umfasst.

9. Verfahren nach einem der Ansprüche 1 bis 8, das nach dem Schritt des Durchführens (S16) eines zweiten Initialisierungsschritts der elektronischen Vorrichtung unter Verwendung des in dem ausgewählten Speicherbereich gespeicherten Inhalts ferner umfasst:
- Bestimmen, dass eine Aktualisierung notwendig ist;
- Auswählen von mindestens einem nicht gesperrten Speicherbereich aus der Menge der N Speicherbereiche;
- Laden einer neuen Version des Inhalts in den mindestens einen ausgewählten nicht gesperrten Speicherbereich;
- Neustarten der elektronischen Vorrichtung.

10. Elektronische Vorrichtung, umfassend einen wiederbeschreibbaren nichtflüchtigen Speicher (12) und mindestens einen Prozessor, der konfiguriert ist zum:
- Durchführen (S10) eines ersten Initialisierungsschritts der elektronischen Vorrichtung;
- Auswählen (S12) eines Speicherbereichs des wiederbeschreibbaren nichtflüchtigen Speichers aus einer Menge von N Speicherbereichen des wiederbeschreibbaren nichtflüchtigen Speichers, wobei jeder der N Speicherbereiche einen Inhalt umfasst, wobei N eine ganze Zahl ≥ 2 ist und der ausgewählte Speicherbereich ein Speicherbereich ist, der eine aktuellste Version des Inhalts umfasst; wobei die Vorrichtung **dadurch gekennzeichnet ist, dass** der Prozessor ferner konfiguriert ist, um in dem Fall, dass M Speicherbereiche die aktuellste Version des Inhalts umfassen, wobei M eine ganze Zahl im Bereich von [2; N] ist, denjenigen Speicherbereich aus den M Speicherbereichen auszuwählen, dessen vorherige Auswahl die älteste ist;
- Sperren (S14) des ausgewählten Speicherbereichs durch eine als flüchtige Sperre bezeichnete Sperre, wobei die Sperre nur durch ein Ausschalten der Stromversorgung des Speichers deaktiviert wird; und
- Durchführen (S16) eines zweiten Initialisierungsschritts der elektronischen Vorrichtung unter Verwendung eines in dem ausgewählten Speicherbereich gespeicherten Inhalts.

11. Elektronische Vorrichtung nach Anspruch 10, **dadurch gekennzeichnet, dass** sie konfiguriert ist, um das Verfahren nach einem der Ansprüche 1 bis 9 auszuführen.

12. Computerprogrammprodukt, **dadurch gekennzeichnet, dass** es Anweisungen umfasst, um das Sperrverfahren nach einem der Ansprüche 1 bis 9 auszuführen, wenn das Programm von einem Prozessor ausgeführt wird.

13. Speichermedium, **dadurch gekennzeichnet, dass** es ein Computerprogramm speichert, das Anweisungen umfasst, um das Sperrverfahren nach einem der Ansprüche 1 bis 9 auszuführen, wenn das Programm von einem Prozessor ausgeführt wird.

## Claims

1. A method for locking a rewritable non-volatile memory (12) of an electronic device, said method comprising:
- performing (S10) a first initialisation step of the electronic device;
- selecting (S12) a memory area of said rewritable non-volatile memory from a set of N memory areas of said rewritable non-volatile memory, each of said N memory areas comprising a content, N being an integer ≥ 2, the selected memory area comprising a most recent version of said content; the method being **characterised in that** it comprises, in the case where M memory areas comprise said most recent version of said content, M being an integer belonging to [2; N], then selecting from said M memory areas, the memory area whose previous selection is the oldest;
- locking (S14) said selected memory area by a lock called volatile lock, said lock being deactivated only by a power-off of the memory; and
- performing a second initialisation step of the electronic device by using (S16) a content stored in said selected memory area.

2. The method according to claim 1, further comprising a hardware maintenance of said N memory areas before any locking of said selected memory area, the hardware maintenance comprising an error detection and, where appropriate, a correction of the detected errors.

3. The method according to one of claims 1 and 2, wherein performing (S10) a first initialisation step of the electronic device comprises:
- Authenticating, by a secure initial boot, a first boot software stored in a first memory area (ZM1) of said rewritable non-volatile memory, said first memory area (ZM1) being different from the N memory areas of said rewritable non-volatile memory;
- booting said first boot software;
- authenticating, by said first boot software, a second boot software stored in a second memory area (ZM2) of said rewritable non-volatile memory different from said first memory area (ZM1), said second memory area (ZM2) being different from the N memory areas of said rewritable non-volatile memory;
- booting said second boot software; and
- authenticating, by said second boot software, for each of said N memory areas, the content stored in each of said N memory areas.

4. The method according to claim 3, wherein locking (S14) said selected memory area by volatile lock further comprises locking (S14) said second memory area (ZM2) by volatile lock.

5. The method according to claim 4, further comprising a hardware maintenance of said second memory area (ZM2) before any volatile locking of said second memory area (ZM2), the hardware maintenance comprising an error detection and, where appropriate, a correction of the detected errors.

6. The method according to one of claims 1 to 5, wherein said rewritable non-volatile memory is a NAND Flash memory and/or an eMMC memory.

7. The method according to one of claims 3 to 6, wherein said first memory area (ZM1) is a one-time programmable memory.

8. The method according to any one of the preceding claims, wherein said content is an application software and the second initialisation step of the electronic device comprises booting said application software.

9. The method according to one of claims 1 to 8, further comprising after the step of performing (S16) a second initialisation step of the electronic device by using the content stored in said selected memory area:
- determining that an update is necessary;
- selecting from the set of N memory areas at least one non-locked memory area;
- loading a new version of the content into said at least one selected non-locked memory area;
- rebooting said electronic device.

10. An electronic device comprising a rewritable non-volatile memory (12) and at least one processor configured to:
- perform (S10) a first initialisation step of the electronic device;
- select (S12) a memory area of said rewritable non-volatile memory from a set of N memory areas of said rewritable non-volatile memory, each of said N memory areas comprising a content, N being an integer ≥ 2, the selected memory area being a memory area comprising a most recent version of said content; said device being **characterised in that** the processor is further configured to, in the case where M memory areas comprise said most recent version of said content, M being an integer belonging to [2; N], then select from said M memory areas, the memory area whose previous selection is the oldest;
- lock (S14) said selected memory area by a lock, called volatile lock, said lock being deactivated only by a power-off of the memory; and
- perform (S16) a second initialisation step of the electronic device by using a content stored in said selected memory area.

11. The electronic device according to claim 10, **characterised in that** it is configured to implement the method according to any one of claims 1 to 9.

12. A computer program product **characterised in that** it comprises instructions to implement the locking method according to any one of claims 1 to 9, when said program is executed by a processor.

13. A storage medium **characterised in that** it stores a computer program comprising instructions to implement the locking method according to any one of claims 1 to 9, when said program is executed by a processor.
